(19) Europäisches Patentamt
European Patent Office
Office européen des brevets

(11) EP 2 003 855 A1

(12) **EUROPEAN PATENT APPLICATION**

(43) Date of publication:
**17.12.2008 Bulletin 2008/51**

(51) Int Cl.:
***H04L 29/08*** (2006.01)

(21) Application number: **07301117.3**

(22) Date of filing: **15.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **France Télécom**
**75015 Paris (FR)**

(72) Inventor: **Iguchi, Makoto**
**FRANCE TELECOM JAPAN**
**Tokyo 160-0022 (JP)**

(54) **Telecommunications method and system**

(57) The present invention relates to a method and a system for connecting anonymously in a peer-to-peer network users that share similar interests, each user being characterized by his own interests and a preference quantifying said user interests, each user being further characterized by a list of contacts and their associated preferences. A preference is quantifiable by a predefined measurement, which aims at selecting bogus user profiles distributed throughout the network to protect users' privacy using the method and system of the present invention.

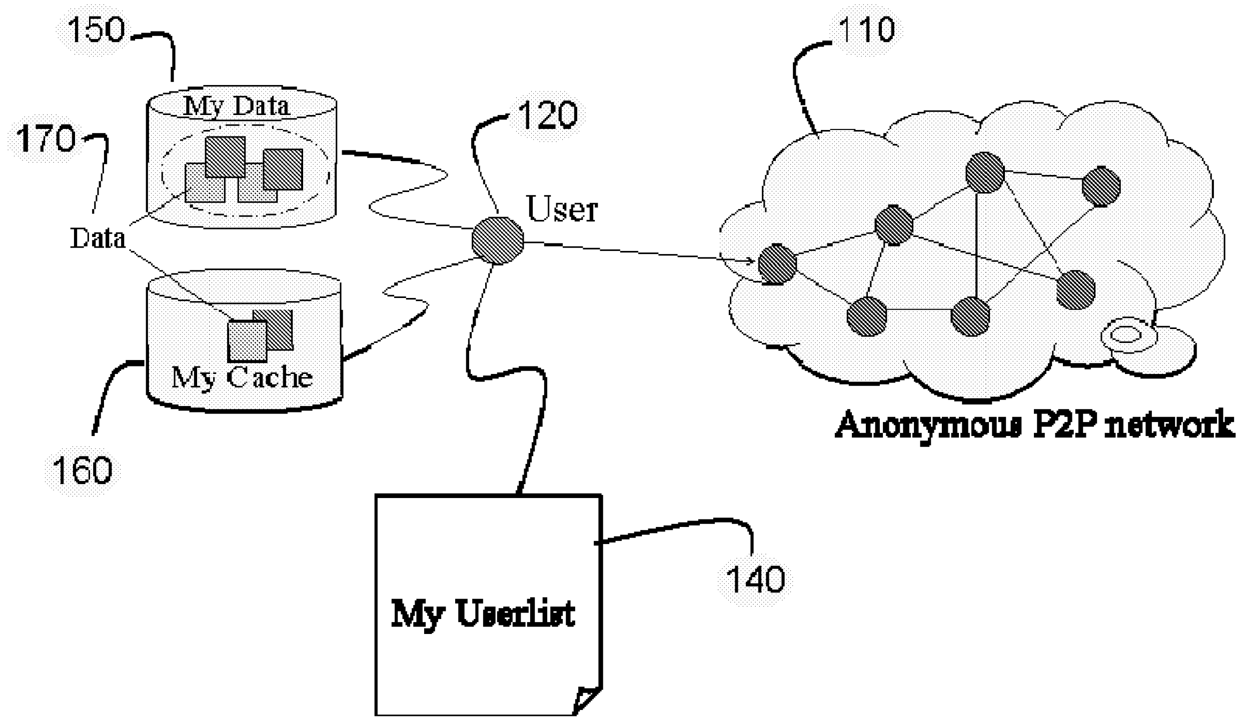


**Figure 1A**

EP 2 003 855 A1

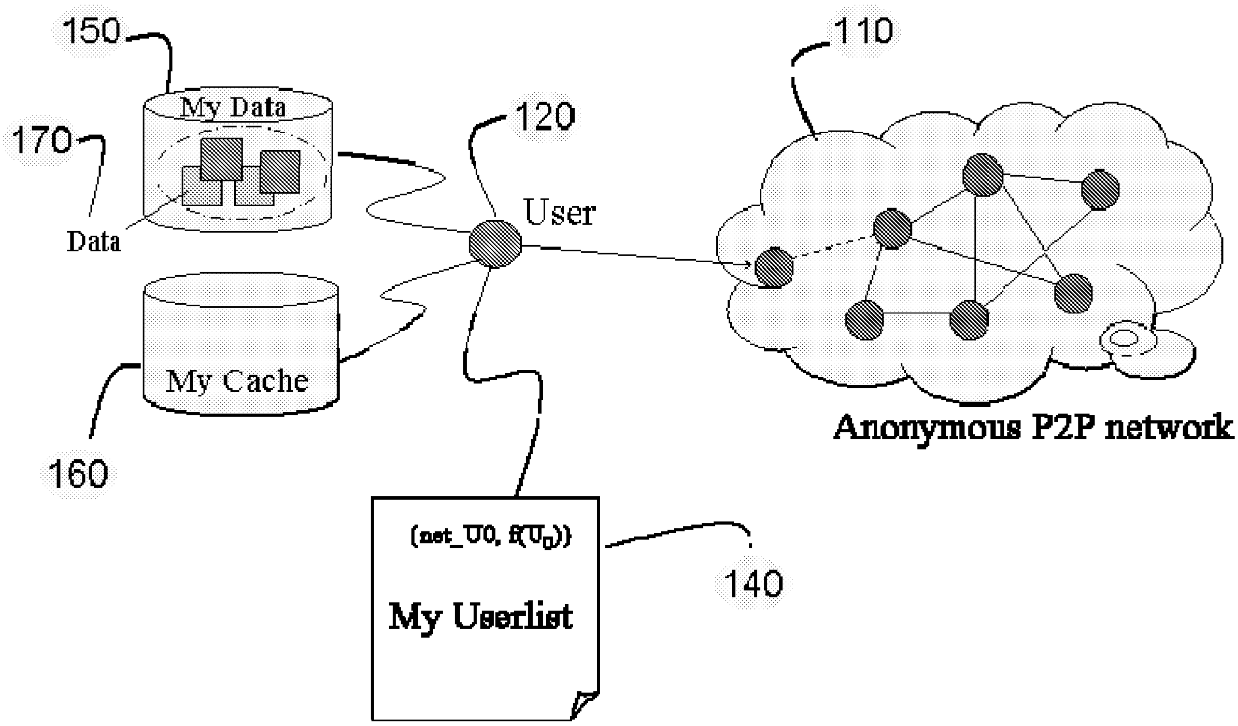
150
110
My Data
170
120
User
Data
My Cache
Anonymous P2P network
160
(net_U0, f(U0))
140
My Userlist

Figure 1B

## Description

### Field of the Invention

The present invention relates in general to peer-to-peer networks, and more specifically to a peer-to-peer network that guarantees anonymous sharing of data between users.

### Background of the Invention

Self-organizing, scalable, and decentralized natures make peer-to-peer (P2P) network technology very powerful and attractive. The strength of P2P networks are successfully exploited for realizing decentralized file sharing applications. These P2P driven file sharing applications enable users to establish a flexible network among them without any central server and to share their data in a distributed manner. Many researchers and developers are exploring the usage of P2P technology in new fields. One of the new directions is to exploit the P2P network technology in the situation closely related to our everyday life. Dealing with the everyday life information means that we need to be more conscious about the way we handle the data. Stricter privacy protection mechanisms, such as providing strong anonymity and privacy, should be employed when we are handling data that touch the daily life of people.

However, their is still a need today for anonymity of users in P2P networks and especially for highly anonymous P2P-based data sharing scheme which aims at realizing a secure P2P data sharing that can be used in the situation where sensitive information and profiles are involved.

### Summary of Invention

It is an object of the present method and system to overcome disadvantages and/or make improvement over the prior art.

To that extend, the invention proposes a method for building a peer-to-peer network allowing the anonymous exchange of data between users that share similar interests, each user being characterized by his/her own interests and a preference quantifying said user interests, each user being further characterized by a list of contacts and their associated preferences. Preferences are quantifiable by a predefined measurement, which aims at selecting bogus user profiles distributed throughout the network to protect users' privacy using the method and apparatus of the present invention. The principle of the method is described using three users to explain the mechanism which allows building a peer-to-peer network and exchanging data anonymously.

A second user receives from a first user a request to identify and return the preference that matches the most the first user's preference. The second user identifies from his/her own preference and the associated preferences of their list of contacts, the preference that matches the most the first user's preference. If this identified preference is the second user's own preference, the second user reply to the first user with the identified preference in response to the first user request. Otherwise, the second user sends to a third user, who is associated with the identified preference in the second user's contact list, a request to identify and return the preference that matches the most the second user alleged preference, where these second user's alleged preference represent the first user preference. The second user receives thus the identified preference from the third user and replies to the first user with the identified preference in response to the first user's request.

The network according to the invention allows the user to establish links in order to exchange data according to the similarity of the level of his/her preference and the alleged preferences of other users. It is qualified as "alleged" because there is no guarantee that the preferences that are passed on are the real preferences of the connected peers. This uncertainty allows exchanging data while providing anonymity for the users.

### Brief Description of the Drawings

Embodiments of the present invention will now be described by way of example only with reference to the accompanying drawings, where like parts are provided with corresponding reference numerals, and in which:

Figure 1A schematically illustrates a peer-to-peer network where each user is defined three repositories (My User list, My data and My cache).

Figure 1B schematically illustrates the initiation state for a new user entering the network.

Figure 2A schematically illustrates the link establishment procedure for a user $U_0$ initiating the link establishment.

Figure 2B schematically illustrates the refined link establishment procedure for a user $U_0$ initiating the link establishment.

Figure 3A schematically illustrates the link establishment procedure for a user $U_i$ receiving a request message from a user $U_{i-1}$.

Figure 3B schematically illustrates the refined link establishment procedure for a user $U_i$ receiving a request message from a user $U_{i-1}$.

Figure 4 schematically illustrates the link establishment procedure for a user $U_i$ receiving a reply message from a user $U_{i+1}$.

Figure 5 schematically illustrates the data exchange network users.

Figure 6 schematically illustrates the data exchange procedure for a user $U_0$ initiating the transmission of a set of data.

Figure 7A schematically illustrates the data exchange procedure for a user $U_i$ receiving a set of data.

Figure 7B schematically illustrates the refined data exchange procedure for a user $U_i$ receiving a set of data.

Figure 8 schematically illustrates the user information sharing procedure for a user $U_0$ broadcasting information.

Figure 9 schematically illustrates the user information sharing procedure for a user $U_i$ receiving broadcasted information.

## Description of Preferred Embodiments

In the network according to the invention, a user possesses some data and wants to establish some links and exchange these data with other users according to the similarity of their respective interests. In order to quantify the interests of a user, a measurement is performed on the data of a user in order to obtain a so called preference, so that the preferences of different users can further be compared. The preference of a user $U_i$ is written pref($U_i$) and does not contain any information to identify user $U_i$. It defines the profile of the user $U_i$. The network information of a user $U_i$ is written net($U_i$) and represents the information identifying the node $U_i$ in the network such as, for example, its IP address, its port number etc... A user who initiates or terminates a link in the P2P network is an edge user. A user who receives a request or a reply message from another user and decides further accordingly to the invention to send another request or reply message to another user is called a forwarding user.

Referring to Figure 1A, an exemplary embodiment of the system according to the invention comprises a peer-to-peer network 110 connecting a plurality of users or nodes 120. The P2P network 110, built with the method according to the invention, allows a user 120 to exchange data as described later on.

The user 120 may be characterized by three repositories: "My Userlist" 140, "My Data" 150 and "My Cache" 160. "My Data" 150 and "My Cache" 160 contain user data 170 that are exchangeable with other users on the network 110. Data 170 may be for example bookmarks, video files, pictures, music files, RSS feeds or anything a user might look for on a P2P network. "My Data" 150 contains the data owned by the user. "My Cache" 160 contains data received from the network during the data exchange between users. "My Userlist" 140 is a user(s) list which contains a list of contacts, being other users of the network in relation with the user and their associated preferences and network information.

Referring to Figure 1B, an exemplary embodiment of the system according to the invention represents the initial state of the repositories of a user 120 when the user 120 joins the network for the first time. The user uses an application which contains the necessary elements to run the invention. The user's "My Data" repository 150 is filled with the own data 170 the user is going to share. The user's "My Cache" repository 160 is empty as the user has not exchanged any data with the other users yet. The user's repository "My Userlist" 140 should contain at least one user information (i.e. at least his/her network information and preference) so that the user can join the network by using either some users information pre-defined in "My Userlist" 140 (in this case, this user could be for example a "super" user, where "super" users are always linked in the network) or that there exists a server that lists the available users, so that the user can fetch the list to initiate the first connection.

The P2P network according to the invention allows exchanging data anonymously between users. This is achieved through "white lies" wherein a second user will present himself/herself as sharing the same interests as a first user while these alleged same interests might not be his/hers. To do so, users proceed with the procedures described in relation with Figures 2 and 3.

In Figure 2A, a first user $U_0$ initiates a link establishment with a second user $U_1$.

In a preliminary step 210, first user $U_0$ may establish a link:

- whenever user $U_0$ triggers the link establishment procedure intentionally, e.g. by starting the application,
- at a predefined time, e.g. every 2 hours,
- whenever the preference of user $U_0$ changes, e.g. when new data are added to his/her "My data" repository 150.

Still referring to Figure 2A, in a subsequent step 220, a user $U_0$'s preference is evaluated. The user $U_0$ is defined as being the first initiator of a link establishment procedure. The preference evaluation corresponds to the measurement of the preference of the data stored in the user's "My data" repository 150. For example, the measurement may be calculation-based, where:

- f($d_i$) denotes an attribute of data $d_i$ 170, as seen in Figure 1, where function f transforms the attribute into a mathematically processable model,
- pref($U_j$) denotes a profile of user $U_j$ 120, as seen in Figure 1, in mathematically processable model where the profile represents the preference of data that will be favoured by the user 120.

It is assumed that the attributes of data possessed by the user 120 and stored in My Data best represent the preference of this user 120, so pref($U_j$) will be calculated using f($d_i$) for all $d_i$ 170 in its data repository "My data" 150. For example, if the data $d_i$ 170 is a text, the vector space model can be used with the TF-IDF (Term Frequency-Inverse Document Frequency) method known from the skilled person in the art. In this case, f($d_i$) and pref($U_j$) will each become a vector. The function pref($U_j$) can be calculated as $\sum_{d_i \in MyData} f(d_i)$.

Still referring to Figure 2A, in a further step 230 of the method according to the invention, the user $U_0$ evaluates the similarity of preferences, which comprises comparing his/her own preference pref($U_0$) with the preferences of other users that user $U_0$ has stored in his/her "My Userlist" 140 in order to select in his/her user list the user preference that matches the most his/her own preference. In other words, the user's preference that is the most similar to user $U_0$'s preference, or with the most similar preference, is selected. For example, there can be used a function $sim_{nn}(U_i, U_j)$, which calculates the similarity of two users $U_i$ and $U_j$ (the more two users exhibit similar preferences (i.e., the more they possess similar data), the closer $sim_{nn}(U_i, U_j)$ will become to 1) for example in the case of using the TF-IDF model as the cosine is used in said TF-IDF. The score is calculated using pref($U_i$) and pref($U_j$) and, for $sim_{nn}(U_i, U_j)$, the cosine similarity measure between sets of vectors [pref($U_i$), pref($U_j$)] is used, giving thus the closest, or most similar, preference of user $U_0$'s "My Userlist" 140 to the user $U_0$'s own preference pref($U_0$).

Other methods to compare preferences are readily available to the man skilled in the art so that a user identifies in his/her "My Userlist" 140 another user whose preference matches the most said user preference using the measurement method.

Still referring to Figure 2A, in a further step 240 of the method according to the invention, the user who corresponds to the preference identified in the previous step 230 (user $U_1$), is selected in $U_0$'s "My Userlist" 140. From this point, user $U_0$ and user $U_1$ are connected and a connection table is used in order to store this information. Thus, in step 240, user $U_0$ updates his/her connection table by storing the fact that user $U_0$ and user $U_1$ are connected and that user $U_0$ is an edge user for this connection.

Still referring to Figure 2A, in a further step 250, a user $U_0$ sends a request message containing net($U_0$) and pref($U_0$) to the user $U_1$ identified in the previous step 240.

Still referring to Figure 2A, in a further step 260, the user $U_0$ waits for a reply of the user $U_1$.

In the method according to the invention, user $U_1$ is not necessarily the user that user $U_0$ is looking for. To that effect, user $U_1$ will proceed with establishing links with other users, pretending user $U_0$'s preference is his/hers. More generally, the link establishment procedure will carry on as long as the contacted user is not showing the most relevant preference using his/her user list and the measurement method.

Figure 3A shows the general principle of the link establishment procedure of the method according to the invention for three users $U_{i-1}$, $U_i$ and $U_{i+1}$. In a step 310, a user $U_i$ receives a request message from a user $U_{i-1}$, said request containing net($U_{i-1}$) and pref($U_Y$). The network information net($U_{i-1}$) is stored in user $U_i$ 's user list and is further used to return to user $U_i$ the identified closest preference. The preference pref($U_Y$) represents a preference of a anonymous user $U_Y$ with $0 \leqq Y \leqq i-1$ as user $U_i$ does not know if the preference he/she receives is $U_{i-1}$'s or the one of a previous user which has been passed on. User $U_i$ always thinks that the received pref ($U_Y$) is actually pref($U_{i-1}$) as user $U_{i-1}$ sent pref($U_Y$) in the request as being his/her own preference, bringing then the anonymity of the method.

In a further step 320, as in step 220 of Figure 2A, a similarity evaluation is carried out by user $U_i$. It consists for user $U_i$ in comparing the received preference pref($U_Y$) with his/her own preference pref($U_i$) and with the preferences of other users that user $U_i$ has stored in his/her "My Userlist" 140 in order to obtain the user preference (either pref($U_i$) or pref($U_{i+1}$)) that matches the most pref($U_Y$).

In a further step 330, user $U_i$ updates his/her "My Userlist" 140 by entering or replacing (if it already exists), in his/her "My Userlist" 140, net($U_{i-1}$) and pref ($U_{i-1}$) with pref($U_{i-1}$)= pref($U_Y$). User $U_i$ stores the connection information and, hence, updates his/her connection table by storing the fact that user $U_{i-1}$ and:

- user $U_{i+1}$ are connected if the closest preference from pref($U_{i-1}$) is pref($U_{i+1}$), in this case $U_i$ is called a forwarder for this connection or,
- user $U_i$ are connected if the closest preference from pref($U_{i-1}$) is pref($U_i$), in this case user $U_i$ is called an edge user for this connection.

In a further step 340, according to whether pref ($U_i$) is the closest from pref($U_Y$) or one preference of a user listed in his/her "My Userlist" 140 is closest to pref ($U_Y$) than from pref($U_i$), user $U_i$ acts as follow:

- if pref($U_i$) is the closest from pref($U_Y$) compare to all the preferences of the users listed in $U_i$'s user list, the user $U_i$ sends a reply message containing net ($U_i$) and pref($U_i$) to user $U_{i-1}$ (step 350). In the case where $U_i$'s user list comprises at most $U_{i-1}$, i.e. $U_i$ is an edge user for the connection, pref($U_i$) is necessarily the closest from pref($U_{i-1}$) and user $U_i$ sends a reply message containing net($U_i$) and pref($U_i$) to user $U_{i-1}$.
- otherwise, it means that the user $U_i$ has identified a user $U_{i+1}$ in his/her "My Userlist" 140 whose preference pref($U_{i+1}$) is closer to pref($U_Y$) than pref($U_i$). In this case, $U_i$ sends a request message containing net($U_i$) and pref($U_Y$) to user $U_{i+1}$.

In a further step 370, user $U_i$ waits for a reply form user $U_{i+1}$.

In other words, the method described in Figure 3A between a first $U_{i-1}$, a second $U_i$ and a third user $U_{i+1}$ may be applied to any triplet of users in the network.

Figure 4 describes the reply procedure according to the invention where user $U_i$ acts upon the reception of a reply message from user $U_{i+1}$ which contains net($U_i$) and pref($U_Z$), where pref($U_Z$) represents a preference of a anonymous user $U_Z$ with $i+1 \leqq Z < \infty$ as user $U_i$ does not know if the preference he/she receives is $U_{i+1}$'s or the one of a user which has been passed on using the reply procedure.

In a step 410, user $U_i$ receives a reply message from user $U_{i+1}$.

In a further step 420, user $U_i$ updates his/her user list, as in step 330 of Figure 3A, but this time by entering of replacing, in his/her user list, net($U_{i+1}$) and pref($U_{i+1}$) with pref($U_{i+1}$)=pref($U_Z$).

In a further step 430, user $U_i$ finds out whether he/she is the initiator of the link establishment:

- if so, the link establishment is complete (step 440)
- if not, user $U_i$ sends a reply message to user $U_{i-1}$ (step 450).

The method according to the invention allows a user to establish links with other users using "white lies" wherein a second user will present himself/herself to a third user as sharing the same interests as a first user until finding the closest preference possible to first user's preference contained in his/her initial request message to second user. Once said first, second and third users have established links together by exchanging their preferences, a further step of the method according to the invention comprises the exchange of data between connected users. According to the invention, a user proceeds to data exchange by selecting in his/her user list a number of users whose preferences are close to his/her preference and by sending these data using "white lies" as seen in Figures 2 and 3.

Thanks to the method according to the invention, the user has defined a list of users (My Userlist 140) sharing alleged similar interests, users that he/she can connect to in order to exchange data through the P2P network. These users are adjacent users, i.e. users that he/she can connect directly to. The number of users that are connected through user lists allows creating an arborescence among users of the P2P network.

Figure 5 describes the type of users in the network according to the invention. An edge user 500 may be the one:

- initiating a link establishment procedure
- initiating or a data exchange procedure
- terminating a link establishment procedure, which means he/she is the one who has the closest preference to the initiator's among the known users in the link
- terminating a data exchange procedure, which means he/she is the one who has the closest preference to the initiator's among the known users in the link.

For example, an edge user is typically the initiating user $U_0$ as seen in

Figure 2A or the terminating user $U_Z$ as seen in Figure 4

A forwarding user 505 is a typically a user $U_i$ in the sense of step 360 as seen in Figure 3A.

Once having established links, as described before, users may exchange some data with users they are connected to.

Figure 6 describes the initiation of a data exchange procedure by a user $U_0$. In a preliminary step 610, a user $U_0$ may want to exchange some data with other users:

- whenever user $U_0$ has established a new link,
- at a predefined time, e.g. every 30 min, with using existing links with contacts stored in his/her user list.

In a further step 620, a user $U_0$ selects one user from his/her user list, user $U_x$ he/she is connected to. The selection step may be a random selection step or based on some criteria such as for example taking users in the order where they appear in the user list.

In a further step 630, user $U_0$ compares the preferences of all the data contained in his/her My Data and My Cache repositories with pref($U_X$) in order to select a set of data, a set being one piece or more of data, that user $U_0$ will send to user $U_x$. The preference of a piece of data is determined in a similar way that the preference of a set of data, as seen in step 220 of Figure 2A using for example the TF-IDF model, where the set would be comprised of only one piece of data. The comparison of pref($U_x$) with the preference of each piece of data contained in user $U_0$'s My data and My Cache is achieved using a function $sim_{nd}(U_i,d_j)$ which scores the relevancy of data $d_j$ to user $U_i$. The more the attribute of $d_j$ matches with the preferences of $U_i$, the closer $sim_{nd}(U_i,d_j)$ will become to 1 for example as the cosine is used in the TF-IDF model: the score is calculated using pref($U_i$) and f ($d_j$), which is, for $sim_{nd}(U_i,d_j)$, the cosine similarity measure between sets of vectors [pref(Ui), f($d_j$)], giving thus in the case of step 630 the closest f($d_j$) to pref($U_X$) by using $sim_{nd}(U_X,d_j)$, where $d_j$ are all the data contained in user $U_0$'s My data and My Cache. The number of data selected by user $U_0$ using step 630 may be, for example, one piece of data with the closest preference to pref($U_X$) or N data with the N closest preferences (1 <N<Max (number of users in $U_0$'s user list)) to pref($U_X$).

Still referring to Figure 6, in a further step 640, user $U_0$ sends to user $U_X$ the data selected in step 630.

According to the invention, users trigger data exchanges when they first complete a link establishment or further at predetermined times. Users receives thus data from others users they connected to.

Figure 7A describes the data exchange procedure when a user $U_i$ receiving a set of data from another user $U_{i-1}$ he/she is connected to. This set of data is received in a preliminary step 710 from the user $U_{i-1}$.

In a further step 720, user $U_i$ stores the received set of data in his/her My Cache if the data are not already stored in his/her My Cache nor My Data.

In a further step 730, user $U_i$ finds out if he/she is an edge user on this link by referring to the connection table generated in step 240 and/or 330:

- if $U_i$ is not an edge user (step 740), he/she forwards the set of data to the next user $U_{i+1}$ on this link. User $U_{i+1}$ is selected by checking the connection table generated in step 240 and/or 330 and by finding the corresponding user $U_{i+1}$ who is connected with user $U_{i-1}$ with user $U_i$ acting as a forwarding user.
- if $U_i$ is an edge user (step 750), he/she consults the connection table generated in step 240 and/or 330 and finds out if he/she has another or more link(s) in which he/she is an edge user or not:

  o if not, the procedure is finished (step 760)
  o if user $U_i$ has another or more link(s) in which he/she is an edge user then he/she sends the set of data to the next user(s) on this/these link (s) (step 770).

According to the invention, while establishing links or exchanging data with other users, users may want as well to exchange user information in order to be more aware of other users.

Figure 8 describes how user information is shared among users.

In a preliminary step 810, a user $U_0$ may want to share user information at a predetermined time, e.g. every 2 hours or for any other suitable reasons to share user information.

In a further step 820, user $U_0$ selects a set of user information, which is composed of the network information and the preferences of users listed in user $U_0$'s user list. User $U_0$ may select for example either a set of information on one user of his/her "My Userlist", several users of his/her "My Userlist" or all the users of his/her "My Userlist".

In a further step 830, user $U_0$ broadcasts or sends the set of information defined in the previous step 820 on one or more links he/she is connected to, where the link(s) is/are selected as seen in step 740 of Figure 7A.

As seen in Figure 8, users may share user information they have received by sending or broadcasting them on the links they are connected to. Figure 9 describes how users deal with sets of information they received on the links they are connected to.

In a preliminary step 910, a user $U_i$ receives a set of information from a user $U_{i-1}$ through a link connecting them.

In a further step 920, user $U_i$ updates his/her "My Userlist" 140 with the received user information.

In a further step 930, user $U_i$ consults the connection table generated in step 240 and/or 330 and finds out if he/she is an edge user or not:

- if so, the procedure of user information sharing is finished (step 940),
- if not, user $U_i$ forwards the received set of information to the next user $U_{i+1}$ on the link (step 950). User $U_{i+1}$ is identified by consulting the connection table generated in step 240 and/or 330.

To illustrate further embodiments of the method according to the invention and, using mechanisms based on those described in the previous figures, we introduce the notion of TTL (Time To Live) in order to prevent message overflowing.

Referring to Figure 2B, the link establishment procedure starts with a user $U_0$ creating and sending a connection request message with the following procedures:

1. As describes previously in steps 210, 220, 230 and 240 of Figure 2A, User $U_0$ determines a user $U_1$ that has the closest resemblance to its preference or profile. First, it calculates $sim_{nn}(U_0, U_1)$ for all $U_j$ that are listed in its user list. The user with the highest score will be selected as user $U_1$. If there exists multiple users that mark the same score, one of them will be picked as $U_1$ by a method defined by the user (for example, it could be randomly).
2. In a further step 242, user $U_0$ randomly selects a value TTL ranging from 0 to TTLmax (TTLmax is a predefined constant throughout the system). Then it either creates "honest" or "forged" req message based on this TTL value. In a further step 244, user $U_0$ finds out if TTL = TTLmax or not.

   (a) If TTL < TTLmax, user $U_0$ sends to $U_1$ an "honest" request comprising TTL, net($U_0$) and pref($U_0$) with its own network information net($U_0$) and profile pref($U_0$) (step 250).
   (b) If TTL = TTLmax, user $U_0$ either sends to $U_1$ an "honest" request (step 250), or randomly selects one user $U_X$ from its "My Userlist" 140 (step 246) and uses pref($U_X$) for creating a "forged" request comprising TTL, net($U_0$) and pref($U_X$) and then User $U_0$ sends the request message to user $U_1$ (step 248).

3. In a further step 260, user $U_0$ waits for user $U_1$'reply.

Referring to the invention, Figure 3B describes the refined establishment procedure for $U_i$ receiving a request message from a user $U_{i-1}$. Upon receiving a connection request message comprising TTL, net($U_{i-1}$) and pref($U_Y$) from user $U_{i-1}$ (step 310), user $U_i$ processes this request message as follows:

1. In a further step 320, user $U_i$ compares pref($U_Y$) comprised in the request message with its own profile pref($U_i$) and profiles pref($U_j$) of all users $U_j$ that are listed in his/her "My Userlist" 140 by calculating

$sim_{nn}(U_Y, U_i)$ and $sim_{nn}(U_Y, U_j)$. In a further step 330, user $U_i$ updates information about user $U_{i-1}$: using a newly-notified profile pref($U_Y$), it updates a pair [net ($U_{i-1}$), pref($U_{i-1}$)] stored in his/her "My Userlist" 140 to [net($U_{i-1}$), pref($U_Y$)]. User $U_i$ also stores the connection information and, hence, updates his/her connection table by storing the fact that user $U_{i-1}$ and:

- user $U_{i+1}$ are connected if the closest preference from pref($U_{i-1}$) is pref($U_{i+1}$), in this case $U_i$ is called a forwarder for this connection or,
- user $U_i$ are connected if the closest preference from pref($U_{i-1}$) is pref($U_i$), in this case user $U_i$ is called an edge user for this connection.

2. In a further step 340, according to whether pref ($U_i$) is the closest from pref($U_Y$) or one preference of a user listed in his/her "My Userlist" 140 is closest to pref($U_Y$) than from pref($U_i$), user $U_i$ acts as follow:

(a) If user $U_i$ itself has the closest profile, it accepts the connection request by sending back an "honest" reply message comprising net($U_i$) and pref($U_i$) to user $U_{i-1}$. Here, user $U_i$'s own profile pref($U_i$) is used in the reply message [step 350].

(b) If another user (user $U_{i+1}$) in the "My Userlist" 140 has the closest profile and if TTL > 0, then (step 360) user $U_i$ sends a request message to user $U_{i+1}$ comprising TTL - 1, net($U_i$) and pref ($U_Y$). TTL is reduce by 1 and the network information is changed to net($U_i$), but pref($U_Y$) is retained.

(c) If another user (user $U_{i+1}$) in the "My Userlist" 140 has the closest profile and if TTL = 0, then (step 355) user $U_i$ accepts the connection request. This time, however, $U_i$ sends back a "forged" reply message comprsing net($U_i$) and pref($U_{i+1}$). Here, user $U_{i+1}$'s profile is used instead of its own profile.

3. In a further step 370, user $U_i$ waits for user $U_{i+1}$'s reply.

Upon receiving a reply message comprising net ($U_{i+1}$) and pref($U_Z$) from user $U_{i+1}$, user $U_i$ performs the following steps as seen in Figure 4.

1. User $U_i$ establishes a connection with user $U_{i+1}$ using net($U_{i+1}$) in the reply message.

2. User $U_i$ updates information about user $U_{i+1:}$ using a newly-notified profile pref($U_Z$), it updates a pair [net ($U_{i+1}$), pref($U_{i+1}$)] stored in his/her "My Userlist" 140 to [net($U_{i+1}$), pref($U_Z$)].

3. User $U_i$ sends a reply message to $U_{i-1}$ comprising net ($U_i$) and pref($U_Z$). The network information in the message is changed to net($U_i$), but pref($U_Z$) is retained.

Concerning the further embodiments involving TTL, the data exchange procedure is the same as seen in Figure 6 and 7A except for the enhancement of steps 723 and 727 as seen in Figure 7B: the TTL is first checked upon reception of the data message, if TTL=0, the data exchanged procedure is finished, otherwise the procedure remains the same as seen in Figure 7A except for the fact that the TTL is passed as a parameter with the set of data sent by user $U_i$ to the adjacent user in step 740. In step 770, when Ui is an edge user and has another link on which he/she can send the set of data, he/she sends TTL-1 as a parameter with the set of data (TTL is reduced by one). A value TTL is predefined and could be different from the one used in the link establishment procedure.

## Claims

1. A method for connecting anonymously in a peer-to-peer network users that share similar interests, each user being **characterized by** his own interests and a preference quantifying said user interests, each user being further **characterized by** a list of contacts and their associated preferences, said method comprising, for a second user in the contact list of a first user, and a third user in the contact list of said second user, the steps of:

   - receiving from the first user a request to identify and reply with a preference that is most similar to said first user preference,
   - identifying from a group comprising the second user and his list of contacts a third user whose preference is most similar to the first user preference,
   - replying to the first user with the preference of the identified third user in response to the first user request, if the identified third user is the second user, else:

     - sending to the identified third user a request to identify and reply with a preference that is most similar to an alleged preference from the second user, said alleged preference being the first user preference,
     - receiving from the third user an identified preference,
     - replying to the first user with the identified preference in response to the first user request.

2. The method according to claim 1, wherein in the identifying step, the third user is defined as the second user if the group comprising the second user and his list of contacts is limited at most to the first and second user.

**3.** The method according to any of the preceding claims wherein the request of the first user comprises said first user preference, and wherein the second user further updates his list of contacts with said first user preference.

**4.** The method according to any of the preceding claims, wherein the request of the first user further comprises said first user network information, said method further comprising for the second user the step of using said network information to reply to said first user.

**5.** The method according to any of the preceding claims, wherein the step of receiving the third user identified preference further comprises the receiving of said third user network information, the second user subsequently updating his list of contacts with said third user identified preference.

**6.** The method according to any of the preceding claims, wherein a user interests comprises data files, the preference for said user being calculated from said data files using the Term Frequency - Inverse Document Frequency (TF-IDF) algorithm.

**7.** The method according to any of the preceding claims, wherein the request of the first user further comprises a first connection length parameter, said first connection length parameter being an integer, said method further comprising for the second user the additional steps of:

- returning to the first user the second user preference if the first connection length parameter is null, or,
- decrementing the first connection length parameter by one unit, the request to the identified third user comprising the decremented first connection length parameter.

**8.** The method according to any of the preceding claims, wherein the second user further stores a connection information linking the first user and the third user.

**9.** The method according to any of the preceding claims, wherein the first user, in order to send a request to the second user, identifies said second user from his list of contacts as having a preference that is the most similar to said first user preference.

**10.** A system for connecting anonymously users that share similar interests, each user being **characterized by** his own interests and a preference quantifying said user interests, each user being further **characterized by** a list of contacts and their associated preferences, said system comprising a peer-to-peer network connecting users, said system being arranged for a second user in the contact list of a first user, and a third user in the contact list of said second user, to:

- receive from the first user a request to identify and reply with a preference that is most similar to said first user preference,
- identify from a group comprising the second user and his list of contacts a third user whose preference is most similar to the first user preference,
- reply to the first user with the preference of the identified third user in response to the first user request, if the identified third user is the second user, else:
    - send to the identified third user a request to identify and reply with a preference that is most similar to an alleged preference from the second user, said alleged preference being the first user preference,
    - receive from the third user an identified preference,
    - reply to the first user with the identified preference in response to the first user request.

**11.** The system according to claim 10, said system being further arranged to define the third user as the second user if the group comprising the second user and his list of contacts is limited at most to the first and second user.

**12.** The system according to any of the preceding claims 10 and 11, wherein the request of the first user comprises said first user preference, said system being further arranged to update the second user list of contacts with said first user preference.

**13.** The system according to any of the preceding claims 10 to 12, wherein the reply from the third user further comprises said third user network information, said system being further arranged for the second user to subsequently update his list of contacts with the third user identified preference.

**14.** The system according to any of the preceding claims 10 to 13, wherein a user interests comprises data files, the preference for said user being calculated from said data files.

**15.** The system according to any of the preceding claims 10 to 14, wherein the request of the first user further comprises a first connection length parameter, said first connection length parameter being an integer, said system being further arranged for:

- the second user to return to the first user said second user preference if the first connection length parameter is null, or,
- the second user to decrement the first connection length parameter by one unit, the request to the identified third user comprising the decremented first connection length parameter.

**16.** The system according to any of the preceding claims 10 to 15, said system being further arranged for the second user to store a connection information linking the first user and the third user.

**17.** The system according to any of the preceding claims 10 to 16, said system being further arranged for the first user, in order to send a request to the second user, to identify said second user from his list of contacts as having a preference that is the most similar to said first user preference.

**18.** A computer readable carrier including computer program instructions that cause a computer to implement the method of claims 1 to 9.

**19.** A method for exchanging data between a first, a second and a third user in the system according to any of the claims 16 to 17, said method comprising, for said second user in the contact list of said first user, and said third user in the contact list of said second user, the steps of:

- receiving from the first user at least one set of data files and a second connection length parameter, said second connection length parameter being an integer,
- selecting the third user using the connection information,
- sending to the third user the at least one set of data files if the second connection length parameter is not null.

**20.** The method according to the previous claim and claim 14, the data files being regrouped in sets of data files, said method further comprising for the first user the steps of:

- selecting the second user in his contact list,
- calculating for each set of data files from the first user interests a preference for said set,
- selecting the set of data files which preference is the most similar to the preference of the second user,
- sending the selected sets of data files to the second user.

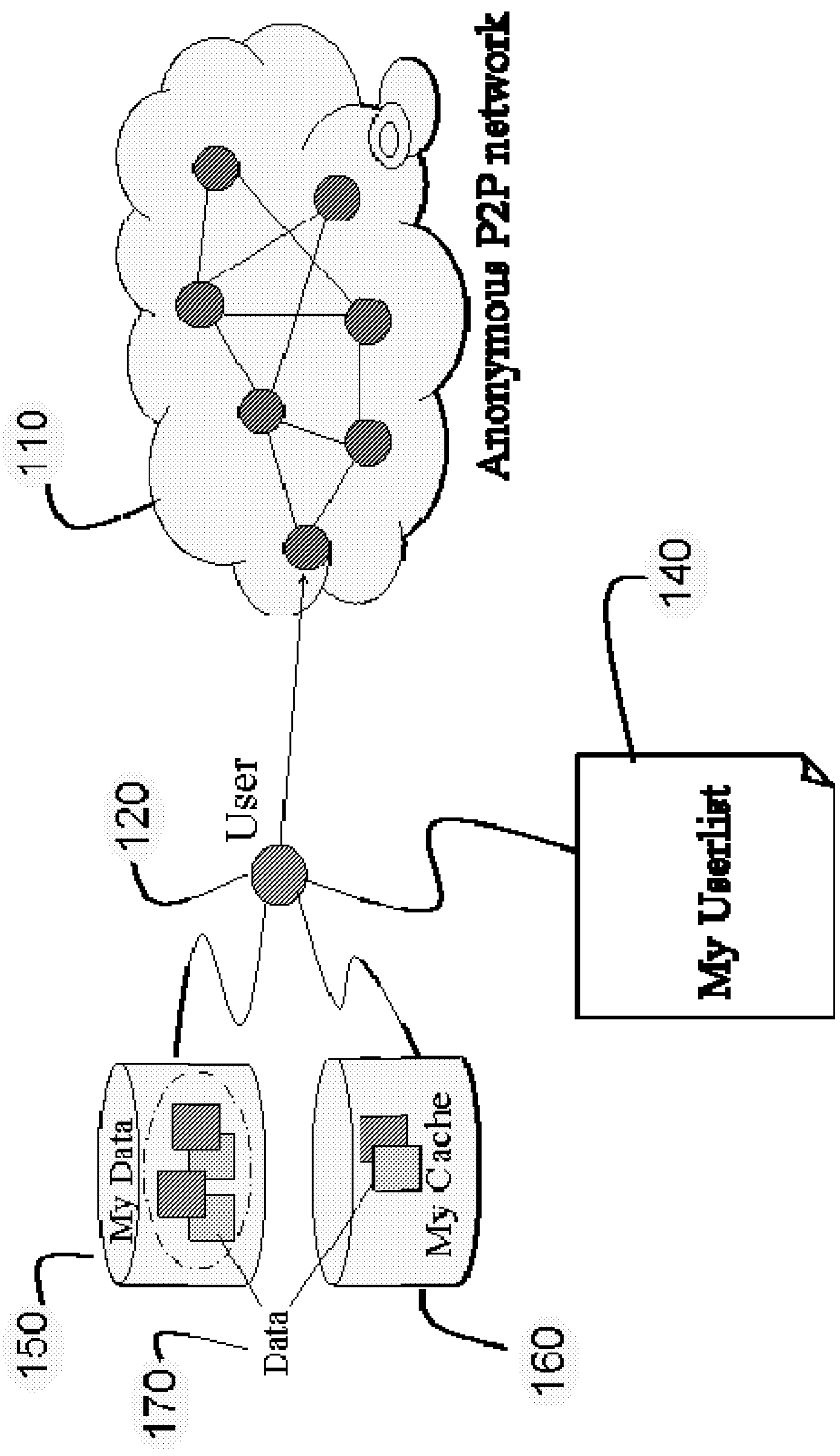
110
Anonymous P2P network
140
120
User
My Userlist
150
My Data
170
Data
160
My Cache

Figure 1A

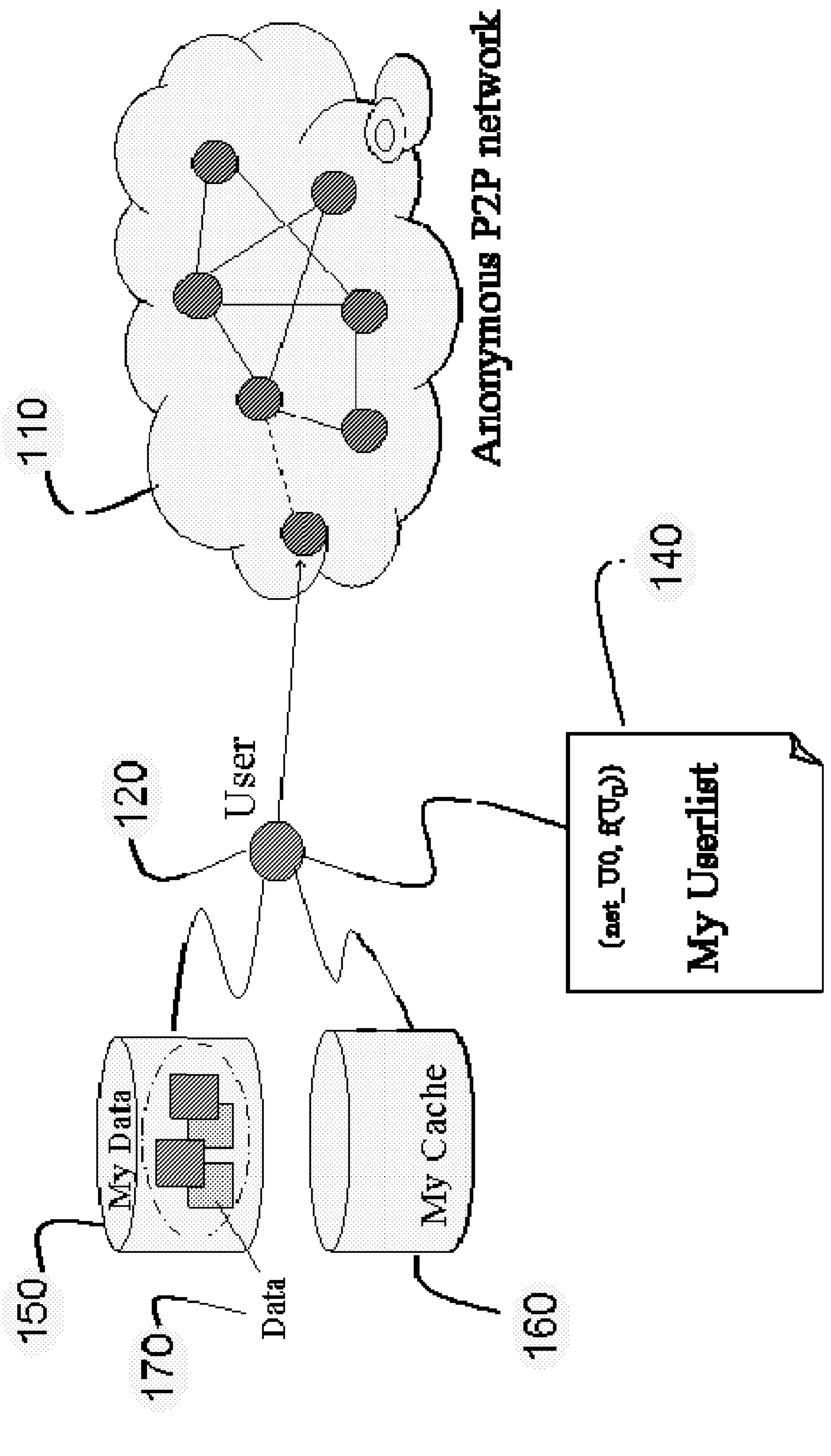
110
Anonymous P2P network
120
User
140
My Userlist
150
My Data
170
Data
My Cache
160

Figure 1B

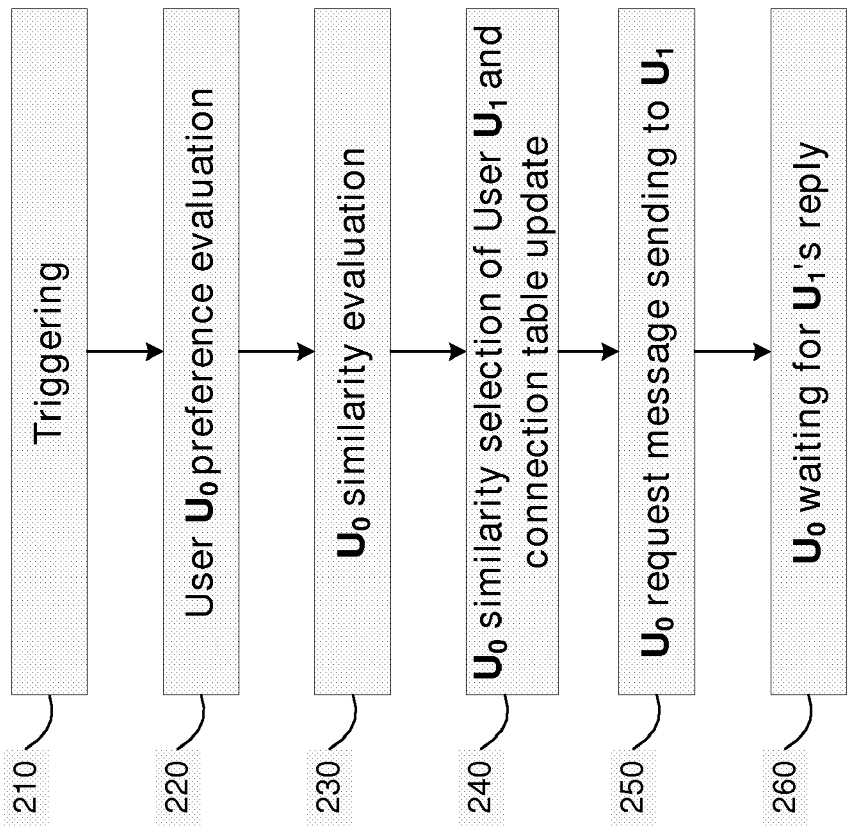
Triggering
User $\mathbf{U_0}$ preference evaluation
$\mathbf{U_0}$ similarity evaluation
$\mathbf{U_0}$ similarity selection of User $\mathbf{U_1}$ and connection table update
$\mathbf{U_0}$ request message sending to $\mathbf{U_1}$
$\mathbf{U_0}$ waiting for $\mathbf{U_1}$'s reply
210
220
230
240
250
260

**Figure 2A**

Figure 2B

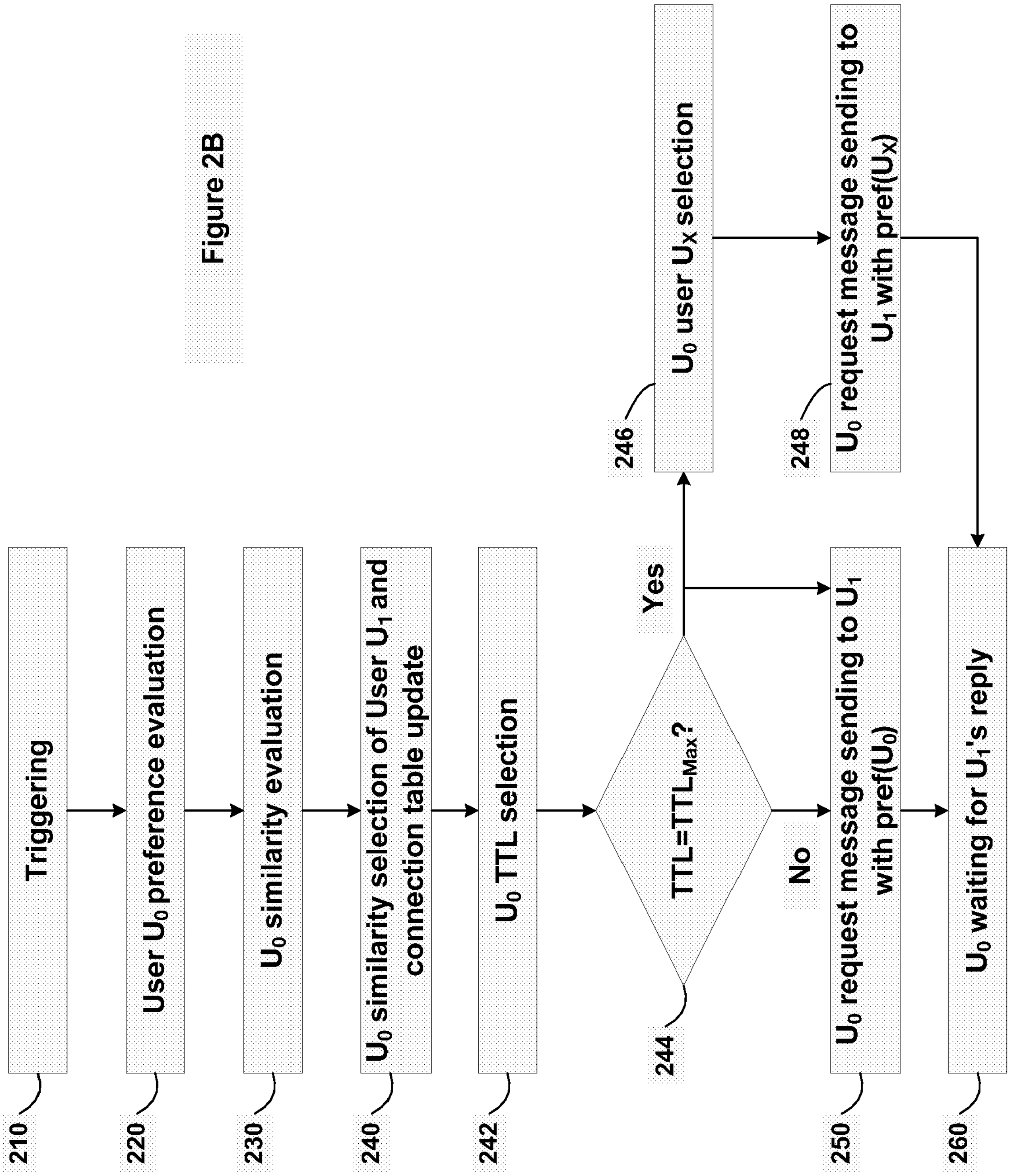
210
Triggering
220
User $U_0$ preference evaluation
230
$U_0$ similarity evaluation
240
$U_0$ similarity selection of User $U_1$ and connection table update
242
$U_0$ TTL selection
244
$TTL=TTL_{Max}$?
Yes
No
246
$U_0$ user $U_X$ selection
248
$U_0$ request message sending to $U_1$ with pref($U_X$)
250
$U_0$ request message sending to $U_1$ with pref($U_0$)
260
$U_0$ waiting for $U_1$'s reply

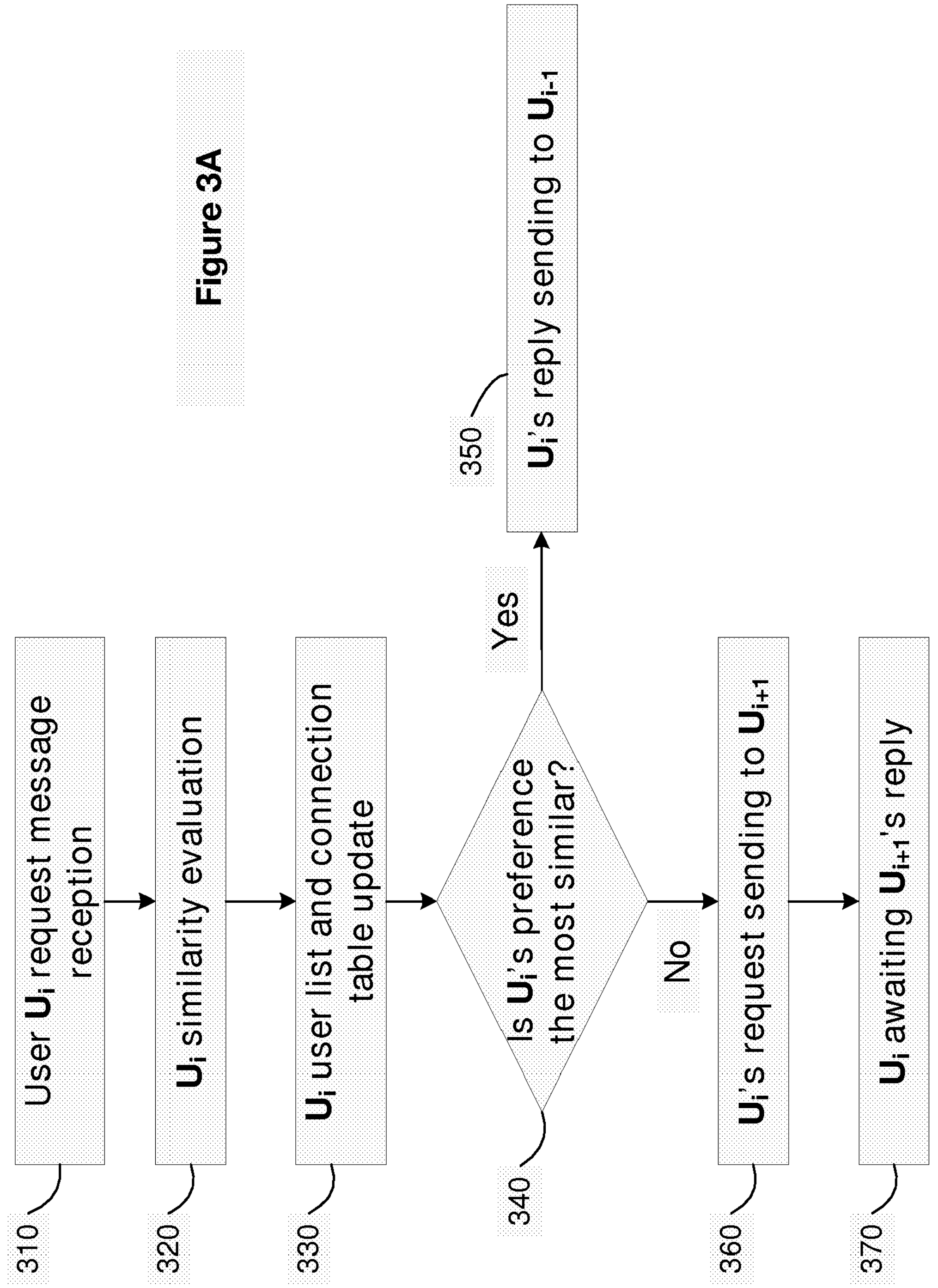
310
User $U_i$ request message reception
320
$U_i$ similarity evaluation
330
$U_i$ user list and connection table update
340
Is $U_i$'s preference the most similar?
Yes
350
$U_i$'s reply sending to $U_{i-1}$
No
360
$U_i$'s request sending to $U_{i+1}$
370
$U_i$ awaiting $U_{i+1}$'s reply

Figure 3A

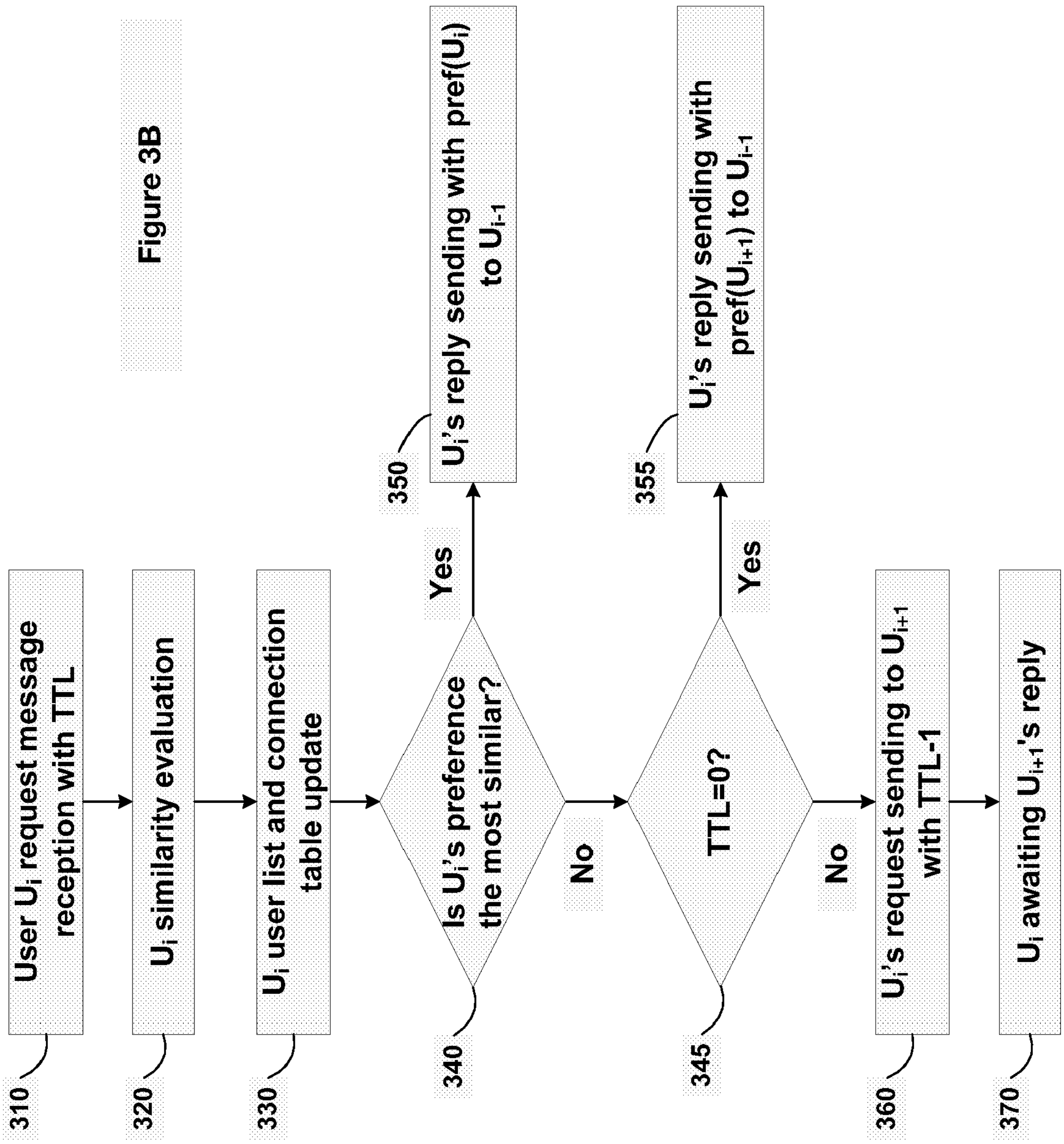
310
User $U_i$ request message reception with TTL
320
$U_i$ similarity evaluation
330
$U_i$ user list and connection table update
340
Is $U_i$'s preference the most similar?
Yes
No
350
$U_i$'s reply sending with pref($U_i$) to $U_{i-1}$
345
TTL=0?
Yes
No
355
$U_i$'s reply sending with pref($U_{i+1}$) to $U_{i-1}$
360
$U_i$'s request sending to $U_{i+1}$ with TTL-1
370
$U_i$ awaiting $U_{i+1}$'s reply

Figure 3B

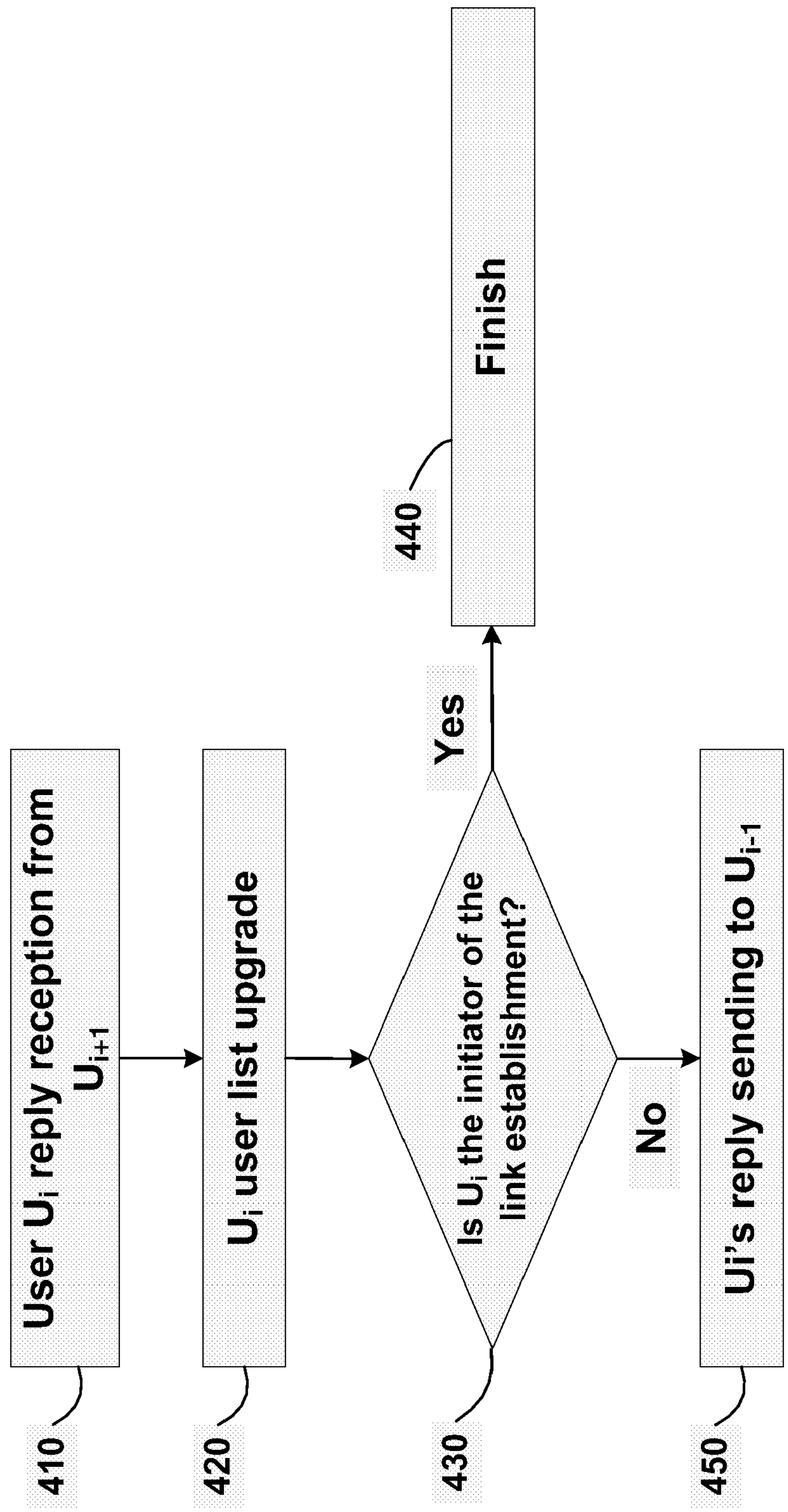
User $U_i$ reply reception from $U_{i+1}$
410
$U_i$ user list upgrade
420
Is $U_i$ the initiator of the link establishment?
430
Yes
Finish
440
No
Ui's reply sending to $U_{i-1}$
450

Figure 4

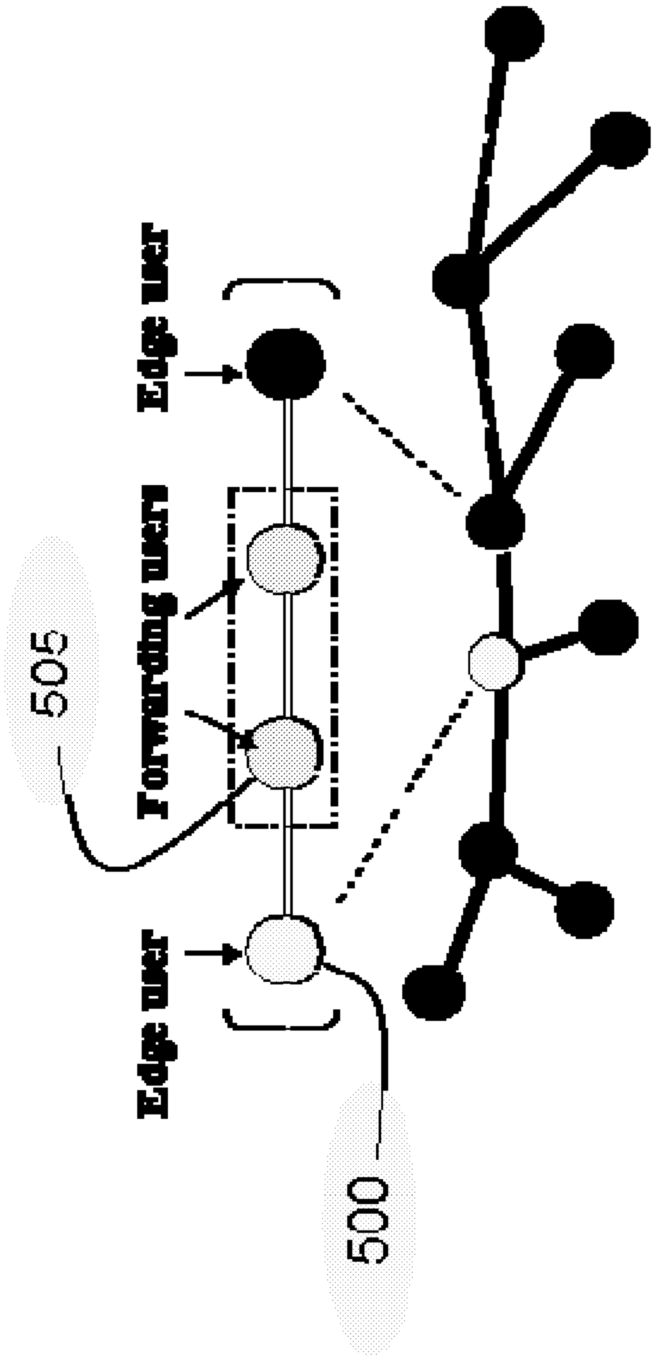


Figure 5

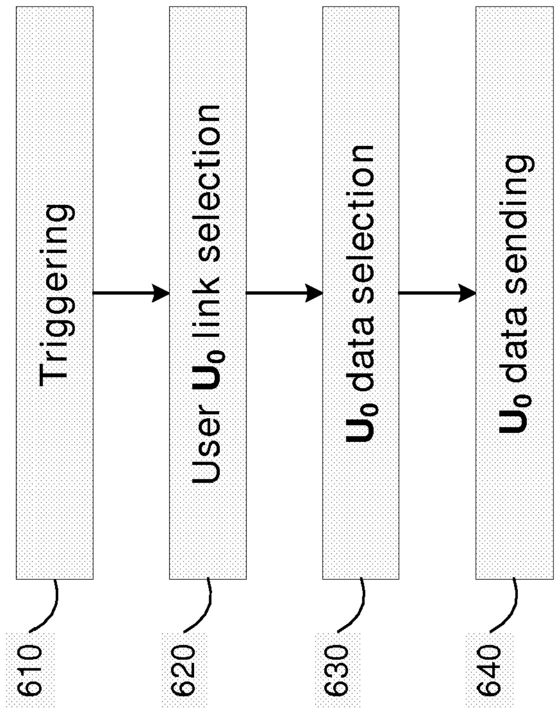
Triggering
User $U_0$ link selection
$U_0$ data selection
$U_0$ data sending
610
620
630
640

Figure 6

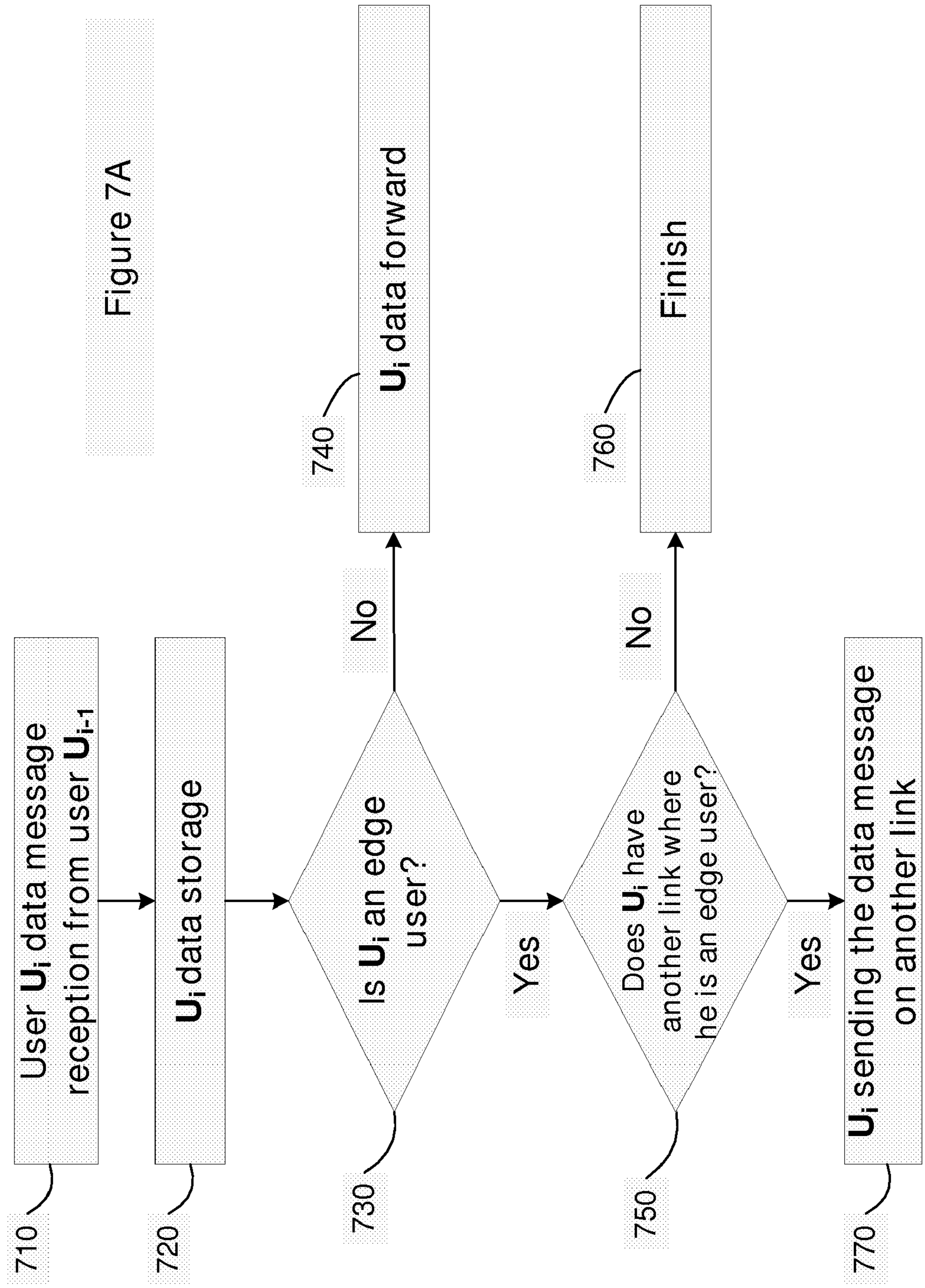
User $U_i$ data message reception from user $U_{i-1}$
$U_i$ data storage
Is $U_i$ an edge user?
No
$U_i$ data forward
Yes
Does $U_i$ have another link where he is an edge user?
No
Finish
Yes
$U_i$ sending the data message on another link
710
720
730
740
750
760
770

Figure 7A

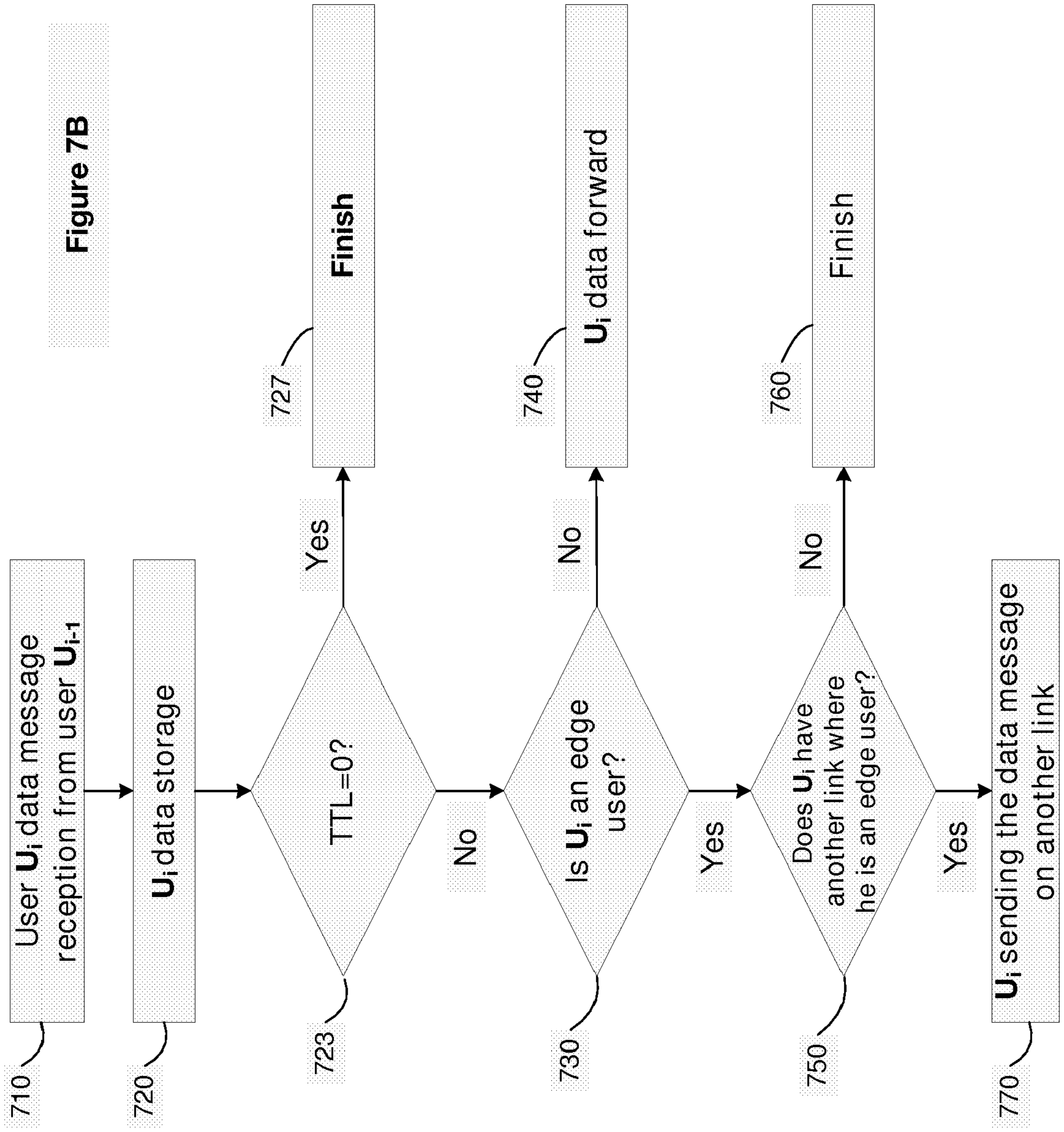
710
User $U_i$ data message reception from user $U_{i-1}$
720
$U_i$ data storage
723
TTL=0?
Yes
727
Finish
No
730
Is $U_i$ an edge user?
No
740
$U_i$ data forward
Yes
750
Does $U_i$ have another link where he is an edge user?
No
760
Finish
Yes
770
$U_i$ sending the data message on another link

Figure 7B

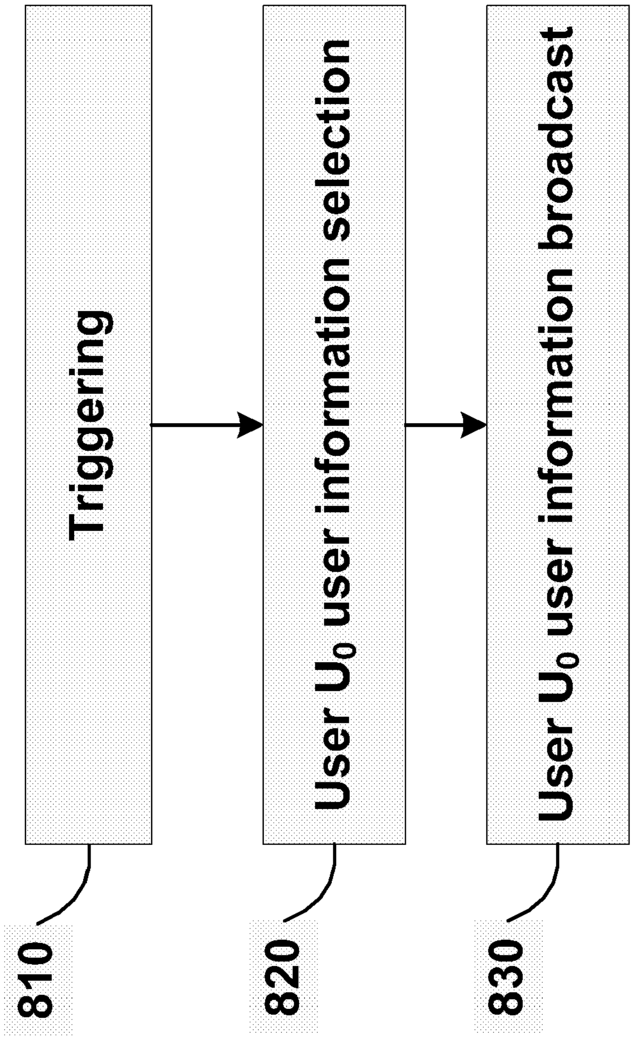
Triggering
User $U_0$ user information selection
User $U_0$ user information broadcast
810
820
830

Figure 8

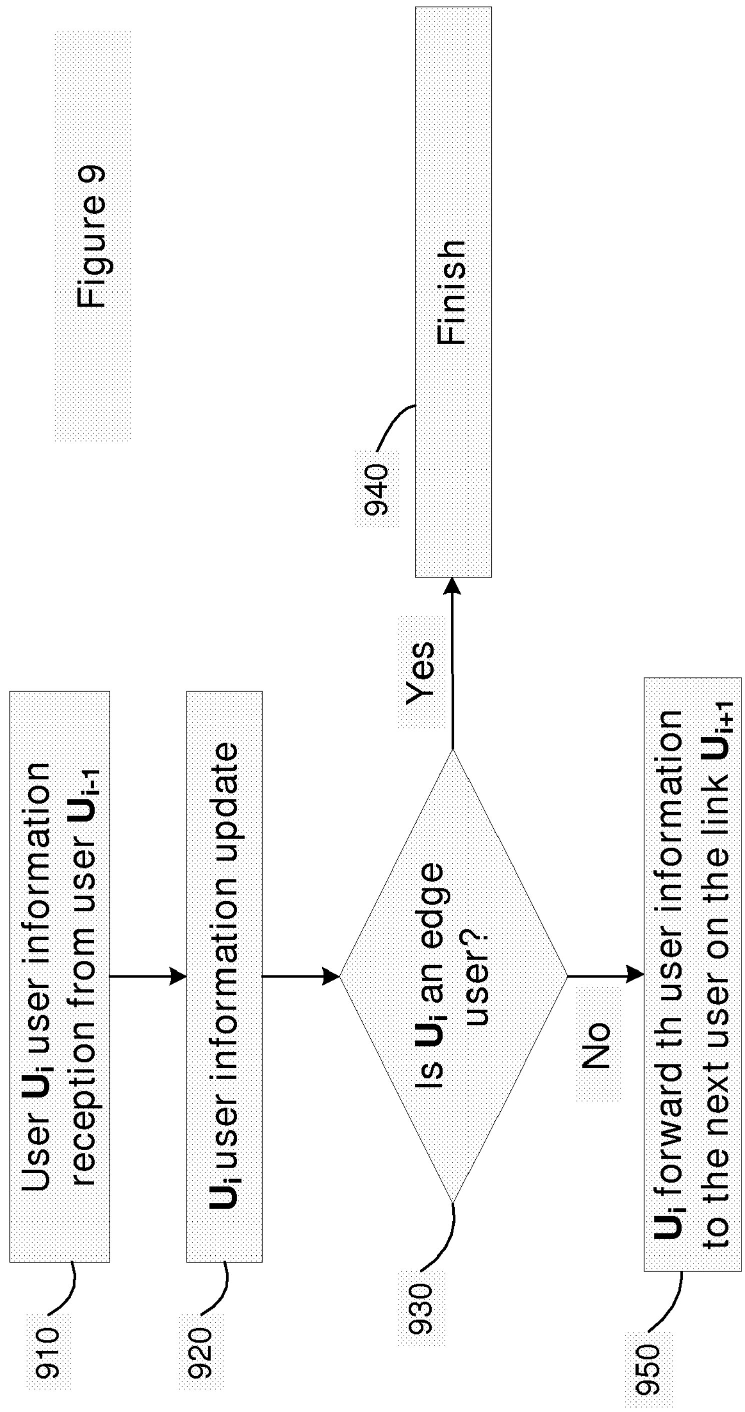
910
User $U_i$ user information reception from user $U_{i-1}$
920
$U_i$ user information update
930
Is $U_i$ an edge user?
Yes
940
Finish
No
950
$U_i$ forward th user information to the next user on the link $U_{i+1}$

Figure 9

European Patent Office

# EUROPEAN SEARCH REPORT

Application Number
EP 07 30 1117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DMITRI SOSHNIKOV ED - VLADIMIR GORODETSKY ET AL: "Multi-agent Approach for Community Clustering Based on Individual Ontology Annotations" AUTONOMOUS INTELLIGENT SYSTEMS: AGENTS AND DATA MINING LECTURE NOTES IN COMPUTER SCIENCE;LECTURE NOTES IN ARTIFICIAL INTELLIGENCE;LNCS, SPRINGER-VERLAG, BE, vol. 3505, 2005, pages 247-262, XP019009993 ISBN: 3-540-26164-8 * abstract * * paragraph [0001] * * paragraph [02.1] - paragraph [02.4] * * paragraph [03.3] - paragraph [03.4] * * paragraph [04.1] - paragraph [04.2] * | 1-7, 9-15, 17-20 | INV. H04L29/08 |
| Y | US 2006/209727 A1 (JENNINGS RAYMOND B III [US] ET AL) 21 September 2006 (2006-09-21) * abstract * * paragraph [0007] * * paragraph [0016] - paragraph [0021]; claim 1 * | 1-7, 9-15, 17-20 | |
| A | WO 03/087992 A (SONY ELECTRONICS INC [US]) 23 October 2003 (2003-10-23) * abstract * * paragraph [0042] - paragraph [0057] * | 1-20 | TECHNICAL FIELDS SEARCHED (IPC) G06F H04L |
| A | WO 01/46843 A (TIVO INC [US]; STAM WIJNAND VAN [US]) 28 June 2001 (2001-06-28) * abstract * * page 2, line 28 - line 36 * * page 3, line 36 - page 7, line 8 * | 1-20 | |

-/--

The present search report has been drawn up for all claims

3

| Place of search | Date of completion of the search | Examiner |
|---|---|---|
| The Hague | 19 November 2007 | Peeters, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 07 30 1117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/198333 A1 (DINGES CLEMENS [DE] ET AL) 8 September 2005 (2005-09-08)<br>* abstract *<br>* paragraph [0119] *<br>----- | 1-20 | |
| | | | TECHNICAL FIELDS SEARCHED (IPC) |

The present search report has been drawn up for all claims

3

| Place of search | Date of completion of the search | Examiner |
|---|---|---|
| The Hague | 19 November 2007 | Peeters, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 30 1117

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2007

| Patent document cited in search report | Publication date | Patent family member(s) | Publication date |
|---|---|---|---|
| US 2006209727 A1 | 21-09-2006 | CN 1825809 A | 30-08-2006 |
| | | JP 2006236344 A | 07-09-2006 |
| WO 03087992 A | 23-10-2003 | AU 2003230843 A1 | 27-10-2003 |
| | | CN 1659529 A | 24-08-2005 |
| | | DE 10392489 T5 | 03-03-2005 |
| | | EP 1495410 A2 | 12-01-2005 |
| | | GB 2404059 A | 19-01-2005 |
| | | JP 2005525629 T | 25-08-2005 |
| | | US 2003233399 A1 | 18-12-2003 |
| WO 0146843 A | 28-06-2001 | AU 2735101 A | 03-07-2001 |
| US 2005198333 A1 | 08-09-2005 | CN 1648803 A | 03-08-2005 |
| | | EP 1560094 A1 | 03-08-2005 |

EPO FORM P0459

For more details about this annex : see Official Journal of the European Patent Office, No. 12/82